# EUROPEAN PATENT SPECIFICATION

(11) **EP 3 578 945 B1**
(45) Date of publication and mention of the grant of the patent: **12.08.2020**
(21) Application number: 18195830.7
(22) Date of filing: 20.09.2018
(51) Int. Cl.: G01M 5/00, B64F 5/60

(54) **METHOD OF FATIGUE TESTING A COMPLEX STRUCTURE**
VERFAHREN ZUR ERMÜDUNGSPRÜFUNG EINER KOMPLEXEN STRUKTUR
PROCÉDÉ PERMETTANT DE TESTER LA FATIGUE D'UNE STRUCTURE COMPLEXE

(30) Priority: 09.06.2018 US 201816004373
(43) Date of publication of application: 11.12.2019
(73) Proprietor: Bell Helicopter Textron Inc., Fort Worth, TX 76101 (US)
(72) Inventor: LAPALME, Maxime, Saint-Lin-Laurentides, Québec J5M 2Z8 (CA); BIRON, Guillaume, Blainville, Québec J7C 0C3 (CA); RUËL, Mathieu, Mirabel, Québec J7N 0C3 (CA); ALTMAN, Leigh, Keller, TX Texas 76248 (US)
(74) Representative: Barker Brettell LLP

(56) References cited:
- WO-A2-2008/130377
- US-A- 6 006 163
- US-A- 6 125 333
- Anonymous: "Critical Joints in Large Composite Aircraft Structure", , 18 December 2002 (2002-12-18), XP055571082, Retrieved from the Internet: URL:https://ntrs.nasa.gov/archive/nasa/cas i.ntrs.nasa.gov/19870001540.pdf [retrieved on 2019-03-19]
- Cynthia Ashforth ET AL: "Certification of Bonded Aircraft Structure and Repairs", , 10 April 2018 (2018-04-10), XP055571097, Retrieved from the Internet: URL:https://www.sto.nato.int/publications/ STO%20Meeting%20Proceedings/STO-MP-AVT-266 /MP-AVT-266-06.pdf [retrieved on 2019-03-19]

## Description

### Cross-Reference to Related Applications

This application claims priority under 35 U.S.C. § 119(e) to U.S. Provisional Patent Application No. 62/577,859 filed on October 27, 2017, by Maxime Lapalme, et al., titled "Method for Fatigue Testing a Complex Structure".

### Background

Airframe systems may include one or more complex structures having several fatigue sensitive zones. Certification, being a critical aspect of development of an aircraft, typically requires fatigue certification of complex airframe structures. Depending on the application, fatigue certification of a complex airframe structure may require elaborate fatigue testing due to the high number of fatigue sensitive zones. Full scale fatigue testing of such complex airframe structures requires a complex test setup to adequately and accurately apply target loads representative of anticipated flight loads. In order to perform representative tests, the loads applied must be carefully analyzed and must fully represent the loading expected during flight. Inadequate design and analysis of the test setup may lead to unexpected issues or failures during testing, which further slows the certification process and causes additional delay and expense.

One recognized challenge in testing complex airframe structures is the presence of a high number of fatigue sensitive zones, which complicates the task of setting up a test that accurately applies representative flight loads to the areas of interest, without overloading other fatigue sensitive areas. Loads intended to introduce benign flight loads for one area of the structure may be critical elsewhere. For example, testing may require applying a load in one area of a structure in order to achieve a target load at an area of interest some distance away. However, before the testing is complete for the area of interest, the applied load may cause an inadvertent failure at a fatigue sensitive location somewhere proximate to the applied load when the applied load is not representative of the actual flight load in the structure. Furthermore, when loads are changed to simulate different flight conditions, the critical area within a fatigue sensitive feature may move. Covering the full load envelope may require a large number of load combinations applied during the testing, any one of which might overload a remote area of the structure that is fatigue sensitive.

Additionally, a complex airframe structure may be sensitive to both high frequency fatigue events (e.g., in-flight vibrations) and low frequency loading fatigue events (e.g., landing events). Certification for low frequency loading often involves testing a fixed number of cycles, while certification for high frequency loading involves testing at a certain stress level for a very high, or even infinite (runout), number of cycles. Applying both types of loading on the same test specimen adds further complexity to the loading scheme. Additionally, for each iteration of testing (e.g., different flight conditions, different areas of interest, high cycle fatigue, low cycle fatigue, etc.), analysis, such as by finite element analysis, of the entire complex airframe structure becomes necessary in order to avoid the cost and delay associated with an inadvertent failure. However, these intricate analysis and design activities are burdensome, resource intensive, and ultimately could incur such costs and delays as the inadvertent failures these activities are intended to avoid. These drawbacks are solved by the invention according to claim 1.

An example program to demonstrate the ability to reliably predict the strength of large bolted composite joints is disclosed in "Critical Joints in Large Composite Aircraft Structure" (2002) by Nelson et al. The program involved testing specimens to generate data on strength and load-deflection characteristics. Load-sharing between fasteners in multirow bolted joints was computed by a nonlinear analysis program. This program was used to predict strengths of 20 additional large subcomponents representing strips from a wing root chordwise splice.

### Brief Description of The Drawings

Figure 1 is a side view of an aircraft according to this disclosure.
Figure 2 is an oblique view of a complex structure of the aircraft of Figure 1.
Figure 3 is an oblique view of a subassembly of the complex airframe structure of Figure 2.
Figure 4 is an oblique view of a joint of the subassembly of Figure 3 and a detail specimen for fatigue testing the joint.
Figure 5A is a tube-to-tube joint of the complex structure of Figure 2.
Figure 5B is a tube-through-plate joint of the complex structure of Figure 2.
Figure 5C is a clip-to-tube joint of the complex structure of Figure 2.
Figure 5D is a structural clip-to-tube joint of the complex structure of Figure 2.
Figure 5E is a clip-to-clip joint of the complex structure of Figure 2.
Figure 5F is a tube-to-blade joint of the complex structure of Figure 2.
Figure 5G is a perpendicular tube joint of the complex structure of Figure 2.
Figure 5H is a tube-to-fitting joint of the complex structure of Figure 2.
Figure 5I is a cross joint of the complex structure of Figure 2.
Figure 5J is a hybrid blade fitting joint of the complex structure of Figure 2.
Figure 5K is a lap weld joint of the complex structure of Figure 2.
Figure 6A is a alternative embodiment of a detail specimen.
Figure 6B is another alternative embodiment of a detail specimen.
Figure 6C is yet another embodiment of a detail specimen.
Figure 7 is a flowchart of a method of testing and validating the fatigue life of the complex structure of Figure 2 according to this disclosure.
Figure 8 is a flowchart of a method of determining a fatigue sensitive point in the complex structure of Figure 2 according to this disclosure.

### Detailed Description

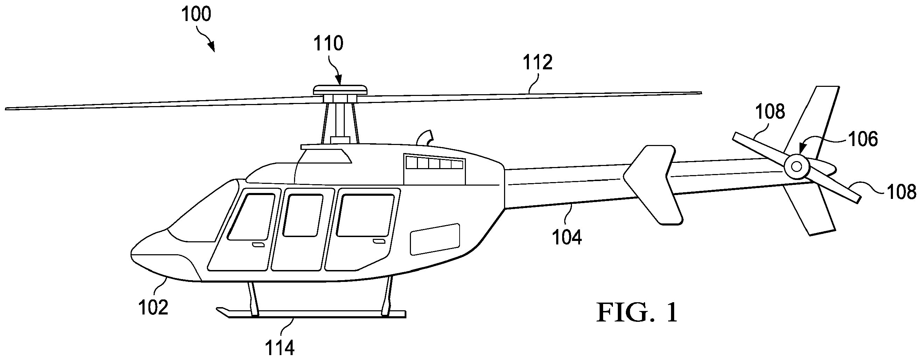

Referring to Figure 1, a side view of an aircraft 100 is shown. In the embodiment shown, aircraft 100 is a helicopter. However, in other embodiments, aircraft 100 may be any other rotorcraft, vertical take-off and landing (VTOL) aircraft, rotary-wing aircraft, fixed-wing aircraft, and/or other "manned" or "un-manned" aircraft. Aircraft 100 comprises a fuselage 102 and an empennage or tail boom 104. A tail rotor 106 comprising a plurality of tail rotor blades 108 is operatively coupled to the tail boom 104. Aircraft 100 further comprises a main rotor system 110 having a plurality of main rotor blades 112 that are selectively rotatable to provide lift to the aircraft 100. A skid or landing gear 114 is attached to the fuselage 102 and configured to support the aircraft 100 when the aircraft 100 is grounded. Aircraft 100 also comprises a pilot control system that includes controls for receiving inputs from a pilot or co-pilot to operate the aircraft 100, and a flight control system, which may, for example, include hardware and/or software for controlling the aircraft 100 in flight. Still further, aircraft 100 may also comprise a combustion engine configured to propel the aircraft 100 during forward flight.

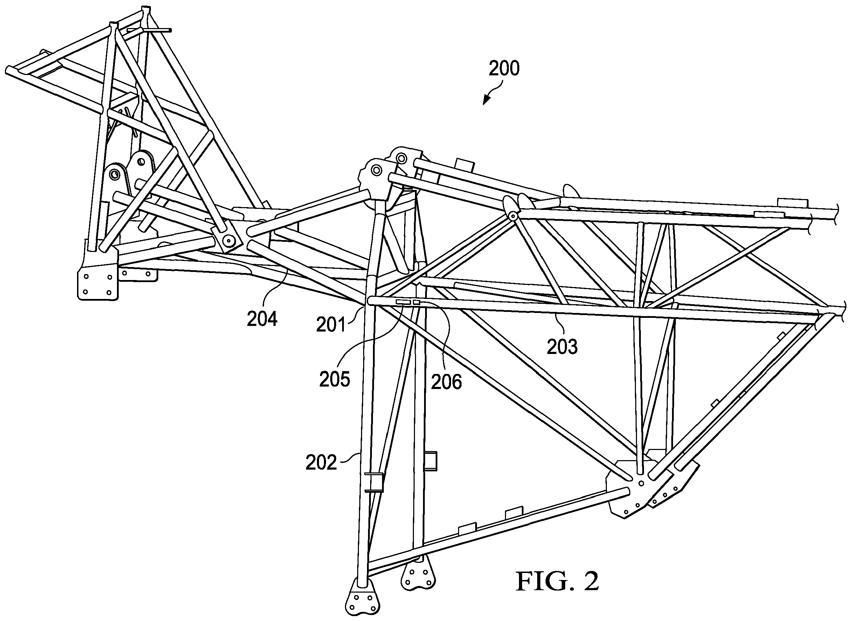

Referring to Figure 2, an oblique view of a complex structure 200 is shown. Complex structure 200 generally comprises a truss structure that forms the airframe structure of aircraft 100. As such, complex structure 200 may form the airframe structure for fuselage 102, tail boom 104, and/or landing gear 114 of aircraft 100. Complex structure 200 may also provide the airframe structure or support structure for a combustion engine, a transmission, controls for the main rotor system 110, a main rotor gearbox, and/or a tail rotor gearbox of aircraft 100. Still further, complex structure 200 may provide the airframe structure for one or more vertical or horizontal stabilizers, wings, and/or other components of aircraft 100. Complex structure 200 is generally formed from a plurality of welded or otherwise joined components (e.g., members 202, 203, 204) and/or subassemblies. As such, complex structure 200 comprises multiple load paths throughout the complex structure 200.

Complex structure 200 further includes multiple features (e.g., interfaces between joined components and/or subassemblies) that may be sensitive to fatigue. For example, joint 201 may comprise a fatigue sensitive feature, where one or more members 202, 203, 204 interface or intersect. Instrumentation, such as a strain gauge 205, may be used to measure and record local strain in the joint 201. Additional instrumentation, such as a displacement instrument 206, may also be used to measure and record displacement in the joint 201. In the embodiment shown, joint 201 comprises a tube-to-tube welded connection. However, complex structure 200 comprises a plurality of different features, each of which may be sensitive to fatigue. Complex structure 200 may be subjected to high frequency loading events (e.g., in-flight vibrations) and/or low frequency loading events (e.g., landing events). Thus, validating the fatigue integrity of complex structure 200 may require testing for both high-cycle fatigue and low-cycle fatigue. Further it will be appreciated that the systems and methods according to this disclosure may be utilized with respect to any of the fatigue sensitive features, areas, or zones of complex structure 200.

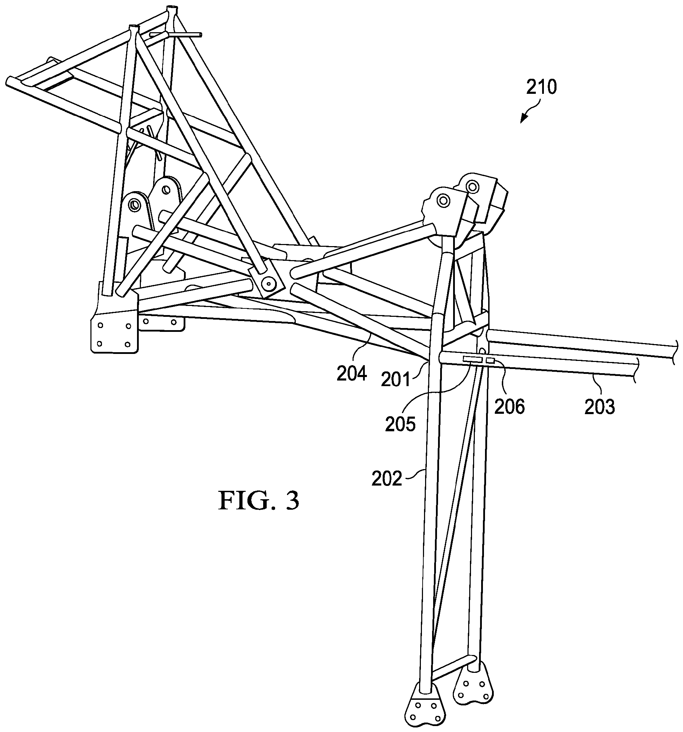

Referring to Figure 3, an oblique view of a subassembly 210 of complex structure 200 is shown. In the embodiment shown, subassembly 210 comprises a control tower portion of the airframe structure configured to provide support to the transmission and controls for the main rotor system 110 of aircraft 100. Accordingly, subassembly 210 may comprise provisions for mounting the transmission, actuators for controlling the main rotor system 110, and/or other components of aircraft 100.

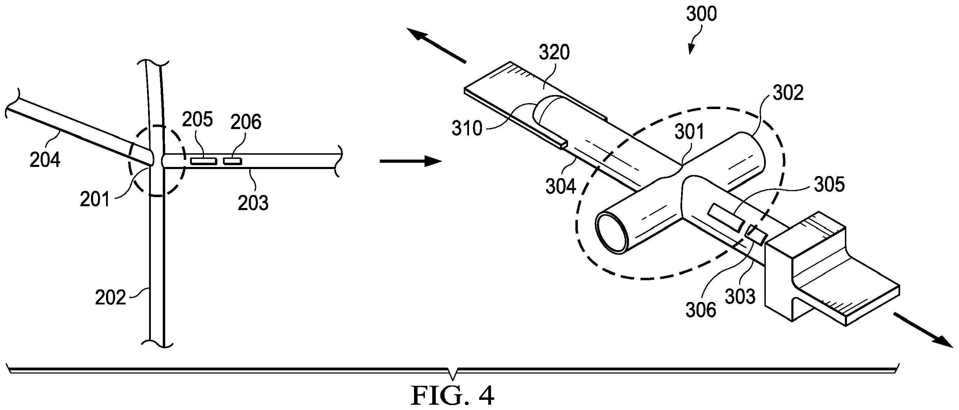

Referring to Figure 4, oblique views of the joint 201 and a detail specimen 300 for fatigue testing joint 201 are shown. Within the complex structure 200, joint 201 is identified as a fatigue sensitive feature that requires fatigue testing for certification of aircraft 100. Fatigue testing joint 201 as part of subassembly 210 of complex structure 200 may require applying a load in a remote area away from joint 201 of the complex structure 200 in order to achieve a target load at joint 201 since the main source of fatigue loading in the subassembly 210 is due to the high frequency inputs of the actuators that control the main rotor system 110. However, before the testing of joint 201 is complete, the applied load may cause an inadvertent failure at some fatigue sensitive location proximate to where the load is applied to the complex structure 200, or alternatively, at some fatigue sensitive location between joint 201 and the location where the load is applied to the complex structure 200 when the applied load is not representative of the actual flight load in the structure. To avoid this potential inadvertent failure and avoid the full scale fatigue test, detail specimen 300 is created for testing and validating the fatigue life of joint 201.

Detail specimen 300 is constructed to replicate joint 201. More specifically, detail specimen 300 comprises a joint 301 that is substantially similar to joint 201. Joint 301 is formed by the same joining process as joint 201. More specifically, joint 301 comprises a tube-to-tube welded connection. In the embodiment shown, joints 201, 301 are arc welded. However, in other embodiments, joint 301 is formed using the same joining process used in forming joint 201, including, for example, fasteners, couplers or retainers, adhesive, friction welding, threading, etc. Once prepared, the detail specimen 300 may be fatigue tested using the same loading, the same or similar stress distribution, and/or the same potential failure mechanisms as joint 201 will experience under real-world conditions.

Joint 301 is formed at the intersection of members 302, 303, 304. This arrangement provides geometry similar to joint 201, which is formed at the intersection of members 202, 203, 204. In the case of detail specimen 300, joint 301 is arranged such that the longitudinal axes of member 303 and member 304 are aligned, even though the longitudinal axes of member 203 and member 204 are not aligned. This is considered a more conservative approach since the geometry of joint 301 is worse for fatigue life than the geometry of joint 201. As will be discussed later herein, by fatigue testing joint 301 with inferior geometry, certification of multiple joints (e.g., 201) may be achieved via testing the single detail specimen 300. Accordingly, the joint 301 of detail specimen 300 is created to validate joint 201, by applying fatigue loads to joint 301 based on the fatigue loads that joint 201 will experience and further based on inferior geometry. However, in alternative embodiments, the geometry of detail specimen 300 may be identical to that of joint 201. Instrumentation, such as a strain gauge 305 similar to strain gauge 205 is used to measure the load level present in joint 301. Additional instrumentation, such as a displacement instrument 306 similar to displacement instrument 206, may also be used to measure and record displacement in the joint 301.

Detail specimen 300 may also be designed to test more than one fatigue sensitive feature via a single fatigue test. For example, in addition to joint 301, detail specimen 300 may include a tube-to-blade joint 310 formed between a flat, plate-like blade 320 and member 304. The tube-to-blade joint 310 may be representative of a tube-to-blade joint of subassembly 210 or other portions of the complex structure 200. Thus, by fatigue testing detail specimen 300, multiple fatigue sensitive features of subassembly 210 and consequently, complex structure 200, may be certified via a single fatigue test.

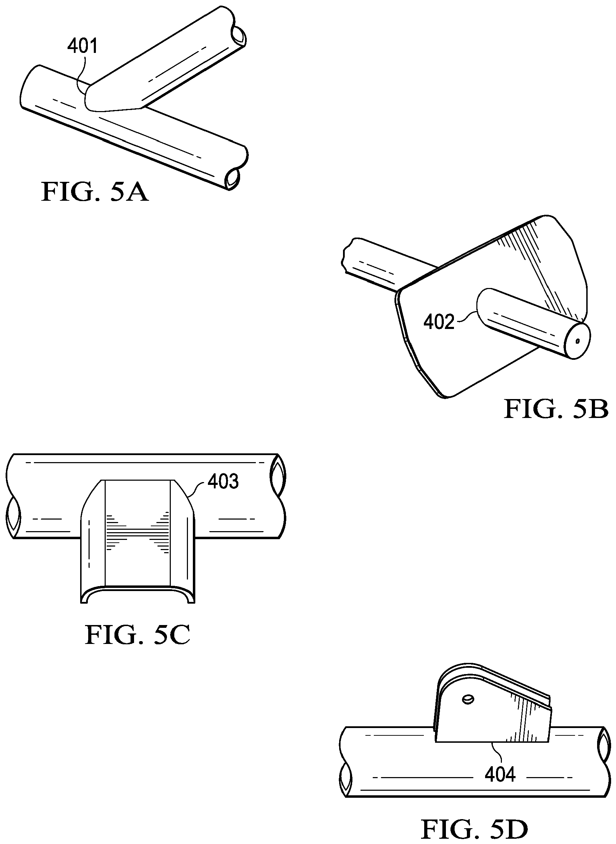

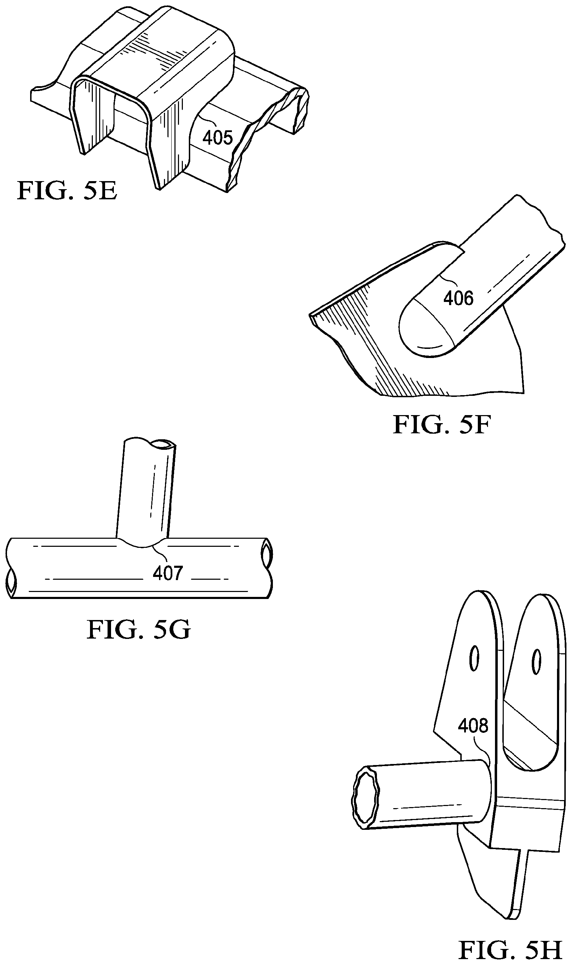

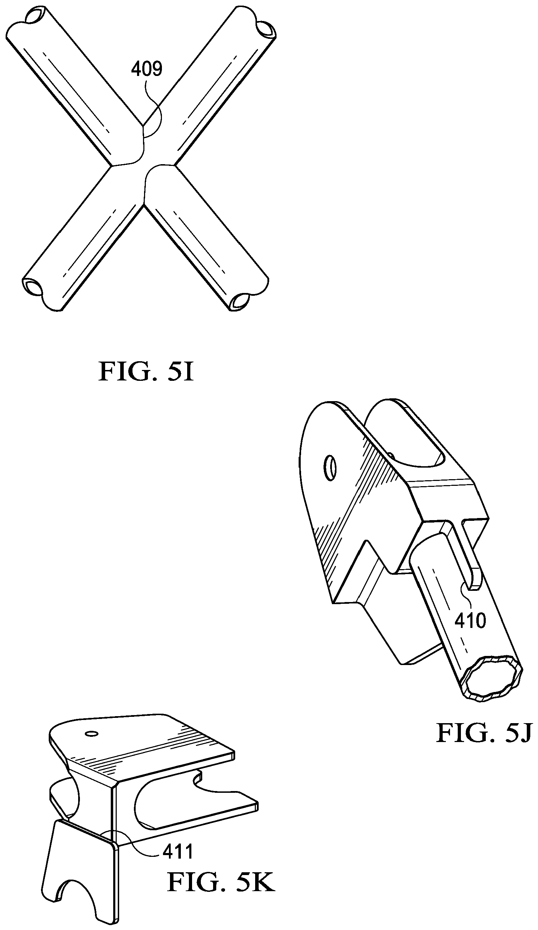

Referring to Figures 5A-5K, joints 401, 402, 403, 404, 405, 406, 407, 408, 409, 410, 411 of the complex structure 200 are shown. Figure 5A shows a tube-to-tube joint 401 that is substantially similar to joints 201, 301. Figure 5B shows a tube-through-plate joint 402. Figure 5C shows a clip-to-tube joint 403. Figure 5D shows a structural clip-to-tube joint 404. Figure 5E shows a clip-to-clip joint 405. Figure 5F shows a tube-to-blade joint 406 that is substantially similar to joint 310. Figure 5G shows a perpendicular tube joint 407. Figure 5H shows a tube-to-fitting joint 408. Figure 5I shows a cross joint 409. Figure 5J shows a hybrid blade fitting joint 410. Figure 5K shows a lap weld joint 411. It will be appreciated that complex structure 200 may comprise any number or combinations of joints 401, 402, 403, 404, 405, 406, 407, 408, 409, 410, 411. In the embodiment shown, complex structure 200 comprises sixty-two tube-to-tube joints 401, six tube-through-plate joints 402, thirty-six clip-to-tube joints 403, twenty-seven structural clip-to-tube joints 404, two clip-to-clip joints 405, twenty-six tube-to-blade joints 406, twenty-one perpendicular tube joints 407, four tube-to-fitting joints 408, sixteen cross joints 409, ten hybrid blade fitting joints 410, and four lap weld joints 411. Accordingly, it will further be appreciated that detail specimens (e.g., detail specimen 300) representative of each of joints 401, 402, 403, 404, 405, 406, 407, 408, 409, 410, 411, may be designed and created for fatigue testing the detail specimens to certify one or more of the joints 401, 402, 403, 404, 405, 406, 407, 408, 409, 410, 411 of complex structure 200.

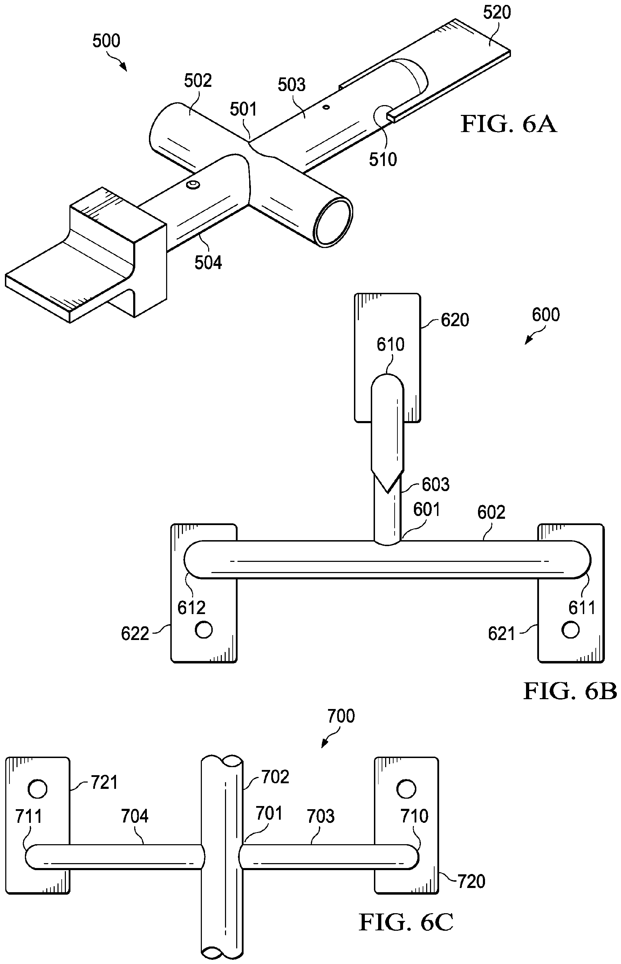

Referring to Figures 6A-6C, alterative embodiments of detail specimens 500, 600, 700 are shown. Detail specimens 500, 600, 700 may be used to fatigue test and validate fatigue sensitive features, such as joints 401, 402, 403, 404, 405, 406, 407, 408, 409, 410, 411 within complex structure 200. In the shown examples, each detail specimen 500, 600, 700 comprises a joint 501, 601, 701, where one or more members 502, 503, 504, 602, 603, 702, 703, 704 intersect, to be fatigue tested. Each detail specimen 500, 600, 700 also includes plate attachment joints 510, 610, 611, 612, 710, 711, where various of the members 502, 503, 504, 602, 603, 702, 703, 704 attach to plates 520, 620, 621, 622, 720, 721. Thus, similar to detail specimen 300, detail specimens 500, 600, 700 are configured to test multiple fatigue sensitive features during one fatigue test. Further, in some embodiments, any of joints 401, 402, 403, 404, 405, 406, 407, 408, 409, 410, 411 may be substituted for joints 501, 510, 601, 610, 611, 612, 701, 710, 711, such that the detail specimens 500, 600, 700 may be designed and created for fatigue testing to certify one or more of the joints 401, 402, 403, 404, 405, 406, 407, 408, 409, 410, 411 of complex structure 200.

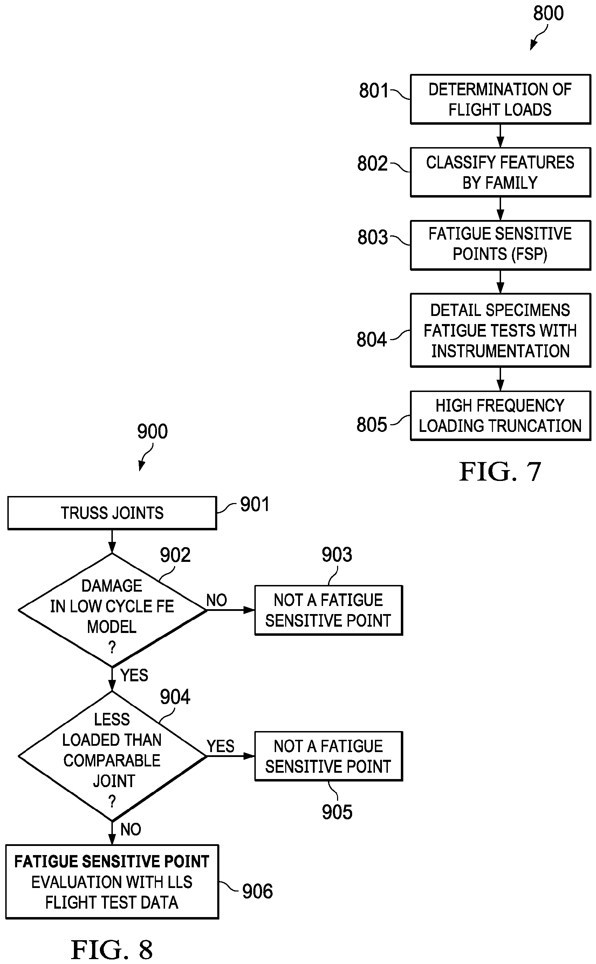

Referring to Figure 7, a flowchart of a method 800 of testing and validating the fatigue life of a complex structure 200 is shown. To avoid a full scale fatigue test of a complex structure 200, a fatigue test can be conducted on detail specimens (e.g., detail specimens 300, 500, 600, 700) that replicate one or more joints 401, 402, 403, 404, 405, 406, 407, 408, 409, 410, 411 of complex structure 200. Method 800 begins at block 801 by conducting flight load tests to determine flight loads acting on the complex structure 200. Flight loads may be determined through various methods and in multiple locations on the complex structure 200. In some embodiments, the flight loads may be determined based on computer simulations and analyses. This may be accomplished via modeling the complex structure 200 three-dimensionally and performing finite element analysis of the complex structure 200. However, this may also be accomplished via modeling a plurality of subassemblies, such as subassembly 210, of the complex structure and independently or collectively performing finite element analysis of the subassemblies or the complex structure 200. In other embodiments, the flight loads may be determined based on a flight load survey taken during a flight test. In this case, the flight loads may be determined based on measured displacements of one or more components or subassemblies of the complex structure 200. The measured displacements, taken by displacement instruments 206 disposed at or near key features of the complex structure 200, may be analyzed to determine the corresponding flight load necessary to create the measured displacements. In yet other embodiments, strain gauges 205 disposed at or near key features of the complex structure 200 may directly measure and record the flight loads experienced by one or more associated components or subassemblies of the complex structure 200.

The methods of determining flight loads in block 801 are recognizably applicable for determining high frequency, in-flight loads, required for testing high cycle fatigue. However, the methods of determining flight loads in block 801 are equally applicable for determining low frequency, landing or in-flight loads, required for low cycle fatigue testing. As such, one or more methods of determining flight loads in block 801 may be performed to determine low cycle fatigue loads (e.g., computer modeling, simulation, and analysis for determining landing loads, displacement measurements of landing gear 114 for determining landing loads, and flight tests for determining landing loads).

Method 800 continues at block 802 by identifying and grouping features (e.g. joints 401, 402, 403, 404, 405, 406, 407, 408, 409, 410, 411) of the complex structure 200 (or subassemblies of the complex structure 200) into families. Since it is not desirable to test all features of the complex structure 200, each feature is classified under a specified family. The geometry and the critical failure mode for each feature are two main criteria to define the families. The purpose of grouping these features into families is to eliminate some of the features from fatigue testing. Features are generally grouped into families based on the type of joint 401, 402, 403, 404, 405, 406, 407, 408, 409, 410, 411. In this case, all tube-to-tube joints 401 may be grouped in a family, while all tube-to-blade joints 406 are grouped in a separate family. Features that exhibit a similar response (e.g., strain or displacement and resulting failure mode) to the flight loads determined at block 801 may also be grouped into a family. Features may be further grouped into sub-families based on the geometry of the features. For example, tube-to-tube joints 401 with a 45° angle of intersection may form a first sub-family, while tube-to-tube joints 401 with a 90° angle of intersection may form a second sub-family. Additionally, features that are symmetrical with respect to loading or geometry may be grouped into a family. This effectively eliminates from fatigue testing the duplicate features that are symmetrical about a longitudinal axis of an aircraft 100 on opposing sides of the complex structure 200 that experience similar flight loads. Features may be further grouped based on the joining method (e.g., welding, fastener type or size, adhesive bonding area, etc.).

Method 800 continues at block 803 by identifying fatigue sensitive points in the complex structure 200 (or subassemblies of the complex structure). As such, the objective of the actions of block 803 is to select, from among the families of features, representative features so that only the representative features from each family are fatigue tested. In this case, only the selected representative features, which are fatigue sensitive points (e.g., joint 201), are tested. Accordingly, where other features in the family react similarly to the flight loads determined at block 801 and are expected to behave similarly in fatigue tests, such features are eliminated from fatigue testing. This effectively reduces the number of features that require testing in order to certify the complex structure 200. For instance, the features exhibiting the highest stresses in response to the flight loads may be identified as fatigue sensitive points, and therefore selected as representative features of the family for fatigue testing. In each family, features that exhibit a similar response (e.g., strain or displacement) to the flight loads determined at block 801 may be selected as being representative of a sub-family or entire family. In another example, features exhibiting the highest displacement in response to the flight loads may be identified as fatigue sensitive points, and therefore selected as representative features of the family for fatigue testing. In other examples, features located on one common side of the complex structure 200 that are symmetrical with respect to the flight loads and/or geometry may be selected as representative features for fatigue testing. In yet another example, features are identified for fatigue testing in accordance with the method 900 disclosed with respect to Figure 8. Accordingly, it will be appreciated that each family may comprise one or more fatigue sensitive points that require fatigue testing.

Method 800 continues at block 804 by creating and testing detail specimens (e.g. detail specimen 300, 500, 600, 700) for each of the representative features selected and/or fatigue sensitive points identified in block 803. For example, joint 201 of complex structure 200 is identified as a fatigue sensitive point. Accordingly a detail specimen, such as detail specimen 300 is created. In some embodiments, the detail specimen may have the same or substantially similar geometry to the joint 201. However, in other embodiments, the detail specimen may be created with geometry that is worse for fatigue life than the actual geometry of the joint 201 as in the complex structure 200. In some embodiments, the detail specimen may be created utilizing the worst geometry for fatigue life within a family. For example, in the case of joint 201, the detail specimen may comprise the smallest branch diameter, largest main diameter, a ninety degree angle of intersection, and the thinnest wall thickness contained within the family. This ensures that the detail specimen includes geometry that represents a worst case scenario for the family. Accordingly, by testing this detail specimen, certification of the entire family may be achieved with testing a single detail specimen. Further, as in detail specimens 300, 500, 600, 700, each detail specimen may be designed to test one or more fatigue sensitive points in the complex structure 200. Thus, multiple fatigue sensitive points in the complex structure 200 may be tested in a single detail specimen 300, 500, 600, 700.

In some embodiments of complex structure 200, multiple detail specimens may be tested in each family. This may be required where the geometry of the fatigue sensitive points in the family is diverse. For example, with respect to the family of tube-to-tube joints 401, in which joint 201 is classified, the geometry includes branch outer tube diameters of 12.7mm (0.50 inches) to 31.75mm (1.25 inches), branch tube thicknesses of 0.889 mm (0.035 inches) to 3.048mm (0.120 inches), main tube outer diameters of 19.05mm (0.75 inches) to 38.1mm (1.50 inches), main tube thicknesses of 0.889 mm (0.035 inches) to 3.048mm (0.120 inches), and angles of intersection of 30 degrees to 90 degrees. Accordingly, multiple detail specimens may be created and tested. However, each of the detail specimens may utilize one or more worst case scenario geometrical criterion. For example, each of the detail specimens may utilize a 90 degree angle of intersection and/or a minimum tube thickness or diameter. As such, it will be appreciated that a single variable may be changed between detail specimens within the same family. This allows close control over the variables and test results, thereby allowing certification of multiple fatigue sensitive points (joints 401, 402, 403, 404, 405, 406, 407, 408, 409, 410, 411) without testing.

During fatigue testing of the detail specimens, the detail specimens include instrumentation, such as a strain gauge 305 and/or displacement instrument 306 to validate that the loads used for fatigue testing the detail specimens produce reactions identical to (or potentially greater than) those observed in the respective fatigue sensitive point in the complex structure 200 during determination of the flight loads in block 801. The strain gauge 305 and displacement instrument 306 used in the detail specimens may be identical to the strain gauges 205 and displacement instruments 206 used in the complex structure during determination of the flight loads in block 801. The strain gauges 305 measure and record local strain in the vicinity of the fatigue sensitive points of the detail specimens, while the displacement instruments 306 measure and record displacement of the fatigue sensitive point of the detail specimens. Regardless of the number of detail specimens tested, it will be appreciated that fewer than all, and more specifically fewer than 50% of the fatigue sensitive points identified in block 803 will be tested to achieve complete certification of the entire complex structure 200. In the exemplary embodiment shown of complex structure 200, more than 200 (approximately 214) potential fatigue sensitive points were identified. However, method 800 reduced the number of fatigue sensitive points requiring fatigue testing to approximately 80 in order to achieve full certification of complex structure 200.

Method 800 concludes at block 805 by comparing the instrumentation measurements between the flight testing of complex structure 200 and fatigue testing the detail specimens. The measured strains on the flight test vehicle are directly compared to the derived critical strains measured in the detail specimens. Thus, the levels of strain at each of the 80 fatigue sensitive points identified in block 803 are compared to the fatigue allowable with the intent of showing that the high frequency load acting on the complex structure 200 is either non-damaging or negligible. More specifically, strain in the joints 401, 402, 403, 404, 405, 406, 407, 408, 409, 410, 411 measured by the strain gauges 205 during flight testing is compared to the strain in the replicated fatigue sensitive point measured by strain gauges 305 during fatigue testing of the detail specimen. Similarly, displacement in a joint 401, 402, 403, 404, 405, 406, 407, 408, 409, 410, 411 measured by displacement instrument 206 during flight testing is compared to the displacement of the replicated fatigue sensitive point in the detailed specimen measured by instrument 306 during fatigue testing of the detail specimen. This comparison, using identical instrumentation, validates that the fatigue testing accurately reflects (or exceeds) the real-life loads (and reactions) in the joints 401, 402, 403, 404, 405, 406, 407, 408, 409, 410, 411 of the complex structure 200.

The comparison may also include, or account for, various fatigue certification requirements. For example, aircraft certification requirements may include fatigue strength knock-downs guided by statistics and other requirements. Block 805 incorporates such certification requirements, or additional requirements to ensure that the testing approach is adequately conservative. Further, because all of the joints 401, 402, 403, 404, 405, 406, 407, 408, 409, 410, 411 may be instrumented during flight testing, the displacement and strain experienced by all of the joints 401, 402, 403, 404, 405, 406, 407, 408, 409, 410, 411 can be compared to that experienced by the detail specimens during fatigue testing. This ensures that the fatigue loads on all of the joints, even those not selected for testing at block 803, are validated for adequate fatigue life. Further, the method 800 is adapted for both high-cycle and low-cycle fatigue validation and certification.

Referring to Figure 8, a flowchart of a method 900 of determining a fatigue sensitive point in the complex structure of Figure 2 is shown. Method 900 is an embodiment of identifying fatigue sensitive points in the complex structure 200 of block 804 in method 800. In method 900, each joint 401, 402, 403, 404, 405, 406, 407, 408, 409, 410, 411 in the complex structure 200 is evaluated individually based on two criteria: (1) whether the feature is shown to accumulate fatigue damage, or experiences displacement exceeding a threshold, during low cycle finite element analysis (block 902); and (2) whether a comparable feature, such as another feature within the same family, experiences higher loads (block 904). These two criteria are used to identify the fatigue sensitive points for which detail specimens will be created and tested for fatigue. Method 900 begins at block 901 by selecting a joint 401, 402, 403, 404, 405, 406, 407, 408, 409, 410, 411 to be evaluated. For example, joint 201, being a tube-to-tube joint 401 of complex structure 200, may be selected. Method 900 may continue at block 902 by evaluating the joint 201. The joint 201 may be evaluated for damage, a strain exceeding a threshold, and/or a displacement exceeding a threshold. In some embodiments, joint 201 may be evaluated using finite element analysis. However, in some embodiments, a static and/or dynamic load test may be performed on the complex structure 200. Further, in some embodiments, the joint 201 may be evaluated to determine if stress in the joint 201 exceeds a threshold.

Block 902 represents an inquiry as to whether the joint 201 accumulated fatigue damage due to displacement exceeding a threshold, and/or stress exceeding a threshold. If the result at block 902 is "No," then method 900 continues to block 903 where it is determined that joint 201 is not a fatigue sensitive point. Thus, joint 201 would not be selected for fatigue testing. Instead, joint 201 may be validated for fatigue based on the comparison at block 806 according to the method 800. However, if the result at block 902 is "Yes," then then method 900 continues to block 904, where evaluation continues. At block 904, the loading applied to the joint 201 is evaluated with respect to comparable features. The comparable features may include those grouped into the same family according to block 802 of method 800. Since the feature to be evaluated is joint 201, which is grouped into a family of tube-to-tube joints 401, the loading in joint 201 is compared to the loading applied to comparable joints (e.g., other joints in the family of tube-to-tube joints 401).

Block 904 represents an inquiry as to whether the joint 201 is subjected to loads that are less than those applied to comparable features. If the result at block 904 is "Yes," then method 900 continues to block 905 where it is determined that joint 201 is not a fatigue sensitive point. Thus, joint 201 would not be selected for fatigue testing. Instead, the feature may be validated for fatigue based on the comparison at block 806 according to the method 800. However, if the result at block 904 is "No," then method 900 continues to block 906, where it is determined that joint 201 is a fatigue sensitive point. As a result, joint 201 will be selected as one for which a detail specimen will be created and tested for fatigue. Method 900 represents an iterative process. That is, for each joint 401, 402, 403, 404, 405, 406, 407, 408, 409, 410, 411 in the complex structure 200, method 900 is repeated to identify each of the features that represent a fatigue sensitive point, for which a detail specimen will be created and tested for fatigue in block 804 of method 800.

## Claims

1. A method (800) of testing and validating a complex airframe structure (200), comprising:
determine (801) flight loads acting on the complex airframe structure (200);
identifying (802) fatigue sensitive points in the complex airframe structure (200) in response to the flight loads acting on the complex airframe structure (200);
grouping (802) the fatigue sensitive points into a plurality of families;
selecting (803) at least one representative fatigue sensitive point from each family;
creating (804) at least one detail specimen (300) that replicates the representative fatigue sensitive point from each family, wherein the detail specimen (300) is created with geometry that yields a lower fatigue life than actual geometry of a fatigue sensitive point in the complex airframe structure (200);
fatigue testing the detail specimens (300); and
comparing (805) results determined in response to fatigue testing the detail specimens (300) to the determined flight loads.

2. The method (800) of claim 1, wherein the flight loads are determined via at least one of (1) three-dimensionally modeling the complex airframe structure (200) and performing finite element analysis of the complex airframe structure (200), and (2) performing a flight load survey on the complex airframe structure (200) during a flight test of an aircraft (100) comprising the complex airframe structure (200).

3. The method (800) of claim 2, wherein:-
(i) the flight loads are determined based on at least one of measured displacements and measured strains experienced by the complex airframe structure (200); and/or
(ii) wherein the fatigue sensitive points are grouped into families based on at least one of (1) the type of joint and (2) the response to the to the flight loads.

4. The method (800) of claim 1 or of claim 2 or of claim 3, wherein the fatigue sensitive points exhibiting the highest stress or the highest displacement in response to the flight loads of each family are selected as representative fatigue sensitive points of the family for fatigue testing.

5. The method (800) of claim 1 or of any of claims 2 to 4, wherein the representative fatigue sensitive points of each family are selected (900) in response to a two part inquiry comprising the steps of:
determining (902) whether fatigue sensitive point incurs damage or experiences a strain or displacement exceeding a threshold; and
determining (904) whether a comparable fatigue sensitive point, such as another fatigue sensitive point within the same family, experiences higher loads.

6. The method (800) of claim 1, wherein:-
(i) the detail specimens (300) that replicate the representative fatigue sensitive points are created utilizing the combination of geometry that yields the lowest fatigue life within a family; and/or
(ii) fatigue testing a single detail specimen (300) with geometry that provides for a lower fatigue life than actual geometry of the fatigue sensitive point in the complex airframe structure (200) allows certification of multiple fatigue sensitive features within a family based on at least one of a low-cycle fatigue certification criteria and a high-cycle fatigue certification criteria.

7. The method (800) of claim 1, or of any claims 2 to 6, wherein detail specimens (300) are created for less than 50% of the fatigue sensitive points identified in the complex airframe structure (200).

8. The method (800) of claim 7, wherein each detail specimen (300) is designed to test one or more fatigue sensitive points in the complex airframe structure (200).

9. The method (800) of claim 7 or of claim 8, wherein the comparing (805) the results determined in response to fatigue testing the detail specimens (300) to the determined flight loads validates that fatigue testing the detail specimens (300) accurately reflects or exceeds the real-life flight loads in the fatigue sensitive points in the complex airframe structure (200); and optionally or preferably,
wherein fatigue testing the detail specimens (300) of each family allows certification of the fatigue sensitive points of the complex airframe structure (200) based on at least one of a low-cycle fatigue certification criteria and a high-cycle fatigue certification criteria.

10. The method (800) of claim 1, or of any of claims 2 to 9, wherein the complex airframe structure (200) forms the airframe structure for at least one of a fuselage (102), tail boom (104), landing gear (114), combustion engine, transmission, and control system of an aircraft (100).

## Patentansprüche

1. Verfahren (800) zum Prüfen und Validieren einer komplexen Flugwerkstruktur (200), umfassend:
Bestimmen (801) von auf die komplexe Flugwerkstruktur (200) wirkenden Fluglasten;
Ermitteln (802) von ermüdungsanfälligen Punkten in der komplexen Flugwerkstruktur (200) in Reaktion auf die auf die komplexe Flugwerkstruktur (200) wirkenden Fluglasten;
Gruppieren (802) der ermüdungsanfälligen Punkte in mehrere Gattungen;
Auswählen (803) mindestens eines repräsentativen ermüdungsanfälligen Punkts aus jeder Gattung;
Herstellen (804) mindestens eines detailgetreuen Prüfkörpers (300), der den repräsentativen ermüdungsanfälligen Punkt aus jeder Gattung nachbildet, wobei der detailgetreue Prüfkörper (300) mit einer Geometrie hergestellt wird, die eine niedrigere Ermüdungslebensdauer erzielt als die tatsächliche Geometrie eines ermüdungsanfälligen Punkts in der komplexen Flugwerkstruktur (200);
Ermüdungsprüfung der detailgetreuen Prüfkörper (300); und
Vergleichen (805) von Ergebnissen, die in Reaktion auf die Ermüdungsprüfung der detailgetreuen Prüfkörper (300) bestimmt wurden, mit den bestimmten Fluglasten.

2. Verfahren (800) nach Anspruch 1, wobei die Fluglasten mithilfe von mindestens einem von (1) dreidimensionalem Modellieren der komplexen Flugwerkstruktur (200) und Durchführen einer Finite-Elemente-Analyse an der komplexen Flugwerkstruktur (200), und (2) Durchführen einer Fluglastuntersuchung an der komplexen Flugwerkstruktur (200) während eines Erprobungsflugs eines Fluggeräts (100), das die komplexe Flugwerkstruktur (200) umfasst, bestimmt werden.

3. Verfahren (800) nach Anspruch 2, wobei:-
(i) die Fluglasten anhand von mindestens einem von gemessenen Verformungen und gemessenen Spannungen bestimmt werden, denen die komplexe Flugwerkstruktur (200) unterliegt; und/oder
(ii) wobei die ermüdungsanfälligen Punkte anhand von mindestens einem von (1) der Art von Fügestelle und (2) der Reaktion auf die Fluglasten in Gattungen gruppiert werden.

4. Verfahren (800) nach Anspruch 1 oder nach Anspruch 2 oder nach Anspruch 3, wobei die ermüdungsanfälligen Punkte, die die höchste Belastung oder die größte Verformung in Reaktion auf die Fluglasten jeder Gattung aufzeigen, als repräsentative ermüdungsanfällige Punkte der Gattung für eine Ermüdungsprüfung ausgewählt werden.

5. Verfahren (800) nach Anspruch 1 oder nach einem der Ansprüche 2 bis 4, wobei die repräsentativen ermüdungsanfälligen Punkte jeder Gattung in Reaktion auf eine zweistufige Überprüfung ausgewählt (900) werden, umfassend die folgenden Schritte:
Bestimmen (902), ob ein ermüdungsanfälliger Punkt Schaden erleidet oder einer Spannung oder Verformung unterliegt, die einen Schwellenwert überschreitet; und
Bestimmen (904), ob ein vergleichbarer ermüdungsanfälliger Punkt, beispielsweise ein anderer ermüdungsanfälliger Punkt innerhalb derselben Gattung, höheren Lasten unterliegt.

6. Verfahren (800) nach Anspruch 1, wobei:-
(i) die detailgetreuen Prüfkörper (300), die die repräsentativen ermüdungsanfälligen Punkte nachbilden, unter Verwendung der Kombination an Geometrie hergestellt werden, die die niedrigste Ermüdungslebensdauer innerhalb einer Gattung erzielt; und/oder
(ii) eine Ermüdungsprüfung eines einzelnen detailgetreuen Prüfkörpers (300) mit einer Geometrie, die eine niedrigere Ermüdungslebensdauer als eine tatsächliche Geometrie des ermüdungsanfälligen Punkts in der komplexen Flugwerkstruktur (200) bereitstellt, eine Zertifizierung mehrerer ermüdungsanfälliger Merkmale innerhalb einer Gattung anhand mindestens eines eines Zertifizierungskriteriums in Bezug auf eine Ermüdung bei niedriger Lastspielzahl und eines Zertifizierungskriteriums in Bezug auf eine Ermüdung bei hoher Lastspielzahl ermöglicht.

7. Verfahren (800) nach Anspruch 1 oder nach einem der Ansprüche 2 bis 6, wobei detailgetreue Prüfkörper (300) für weniger als 50 % der in der komplexen Flugwerkstruktur (200) ermittelten ermüdungsanfälligen Punkte hergestellt werden.

8. Verfahren (800) nach Anspruch 7, wobei jeder detailgetreue Prüfkörper (300) zum Prüfen einer oder mehrerer ermüdungsanfälliger Punkte in der komplexen Flugwerkstruktur (200) ausgelegt ist.

9. Verfahren (800) nach Anspruch 7 oder nach Anspruch 8, wobei das Vergleichen (805) der Ergebnisse, die in Reaktion auf die Ermüdungsprüfung der detailgetreuen Prüfkörper (300) bestimmt wurden, mit den bestimmten Fluglasten validiert, dass die Ermüdungsprüfung der detailgetreuen Prüfkörper (300) die realen Fluglasten in den ermüdungsanfälligen Punkten in der komplexen Flugwerkstruktur (200) akkurat widerspiegelt oder übersteigt; und optional oder vorzugsweise,
wobei die Ermüdungsprüfung der detailgetreuen Prüfkörper (300) jeder Gattung eine Zertifizierung der ermüdungsanfälligen Punkte der komplexen Flugwerkstruktur (200) anhand mindestens eines eines Zertifizierungskriteriums in Bezug auf eine Ermüdung bei niedriger Lastspielzahl und eines Zertifizierungskriteriums in Bezug auf eine Ermüdung bei hoher Lastspielzahl ermöglicht.

10. Verfahren (800) nach Anspruch 1 oder nach einem der Ansprüche 2 bis 9, wobei die komplexe Flugwerkstruktur (200) die Flugwerkstruktur für mindestens eines eines Rumpfs (102), eines Heckauslegers (104), eines Fahrwerks (114), einer Brennkraftmaschine, eines Getriebes und eines Steuersystems eines Fluggeräts (100) bildet.

## Revendications

1. Procédé (800) de test et de validation d'une structure de cellule complexe (200), comprenant :
la détermination (801) des charges de vol agissant sur la structure de cellule complexe (200) ;
l'identification (802) des points sensibles à la fatigue dans la structure de cellule complexe (200) en réponse aux charges de vol agissant sur la structure de cellule complexe (200) ;
le regroupement (802) des points sensibles à la fatigue en une pluralité de familles ;
la sélection (803) d'au moins un point sensible à la fatigue représentatif de chaque famille ;
la création (804) d'au moins un échantillon détaillé (300) qui reproduit le point représentatif sensible à la fatigue de chaque famille, l'échantillon détaillé (300) étant créé avec une géométrie qui donne une durée de vie en fatigue inférieure à la géométrie réelle d'un point sensible à la fatigue dans la structure de cellule complexe (200) ;
le test de fatigue des échantillons détaillés (300) ; et
la comparaison (805) des résultats déterminés en réponse au test de fatigue des échantillons détaillés (300) aux charges de vol déterminées.

2. Procédé (800) selon la revendication 1, les charges de vol étant déterminées par au moins l'une des méthodes suivantes : (1) modélisation tridimensionnelle de la structure de cellule complexe (200) et réalisation d'une analyse par éléments finis de la structure de cellule complexe (200), et (2) réalisation d'une étude des charges de vol sur la structure de cellule complexe (200) pendant un test en vol d'un aéronef (100) comprenant la structure de cellule complexe (200)

3. Procédé (800) selon la revendication 2,
(i) les charges de vol étant déterminées sur la base d'au moins un des déplacements mesurés et des contraintes mesurées subies par la structure de cellule complexe (200) ; et/ou
(ii) les points sensibles à la fatigue étant regroupés en familles sur la base d'au moins un des éléments suivants : (1) le type d'articulation et (2) la réponse aux charges de vol.

4. Procédé (800) selon la revendication 1, la revendication 2 ou la revendication 3, les points sensibles à la fatigue présentant la contrainte la plus élevée ou le déplacement le plus élevé en réponse aux charges de vol de chaque famille étant sélectionnés comme points sensibles à la fatigue représentatifs de la famille pour les tests de fatigue.

5. Procédé (800) selon la revendication 1 ou selon l'une quelconque des revendications 2 à 4, les points sensibles à la fatigue représentatifs de chaque famille étant sélectionnés (900) en réponse à une enquête en deux parties comprenant les étapes de :
détermination (902) si le point sensible à la fatigue subit un dommage ou subit une contrainte ou un déplacement dépassant un seuil
détermination (904) si un point sensible à la fatigue comparable, tel qu'un autre point sensible à la fatigue au sein de la même famille, subit des charges plus élevées.

6. Procédé (800) selon la revendication 1,
(i) les échantillons détaillés (300) qui reproduisent les points sensibles à la fatigue représentatifs étant créés en utilisant la combinaison de géométrie qui donne la durée de vie en fatigue la plus faible au sein d'une famille ; et/ou
(ii) le test de fatigue sur un seul échantillon détaillé (300) dont la géométrie prévoit une durée de vie en fatigue inférieure à la géométrie réelle du point sensible à la fatigue dans la structure de cellule complexe (200) permet la certification de multiples caractéristiques sensibles à la fatigue au sein d'une famille sur la base d'au moins l'un d'un critère de certification de la fatigue à bas cycle et d'un critère de certification de la fatigue à haut cycle.

7. Procédé (800) selon la revendication 1, ou selon l'une quelconque des revendications 2 à 6, des échantillons détaillés (300) étant créés pour moins de 50 % des points sensibles à la fatigue identifiés dans la structure de cellule complexe (200).

8. Procédé (800) selon la revendication 7, chaque échantillon détaillé (300) étant conçu pour tester un ou plusieurs points sensibles à la fatigue dans la structure de cellule complexe (200).

9. Procédé (800) selon la revendication 7 ou la revendication 8, la comparaison (805) des résultats déterminés en réponse au test de fatigue des échantillons détaillés (300) aux charges de vol déterminées validant que le test de fatigue des échantillons détaillés (300) reflète ou dépasse avec précision les charges de vol réelles dans les points sensibles à la fatigue dans la structure de cellule complexe (200) ; et éventuellement ou de préférence,
le test de fatigue des échantillons détaillés (300) de chaque famille permettant de certifier les points sensibles à la fatigue de la structure de cellule complexe (200) sur la base d'au moins l'un d'un critère de certification de la fatigue à bas cycle et d'un critère de certification de la fatigue à haut cycle.

10. Procédé (800) selon la revendication 1, ou selon l'une quelconque des revendications 2 à 9, la structure de cellule complexe (200) formant la structure de cellule pour au moins l'un des éléments suivants : fuselage (102), poutre de queue (104), train d'atterrissage (114), moteur à combustion, transmission et système de commande d'un aéronef (100).
